# EUROPÄISCHE PATENTANMELDUNG

(11) **EP 1 408 654 A2**
(43) Veröffentlichungstag der Anmeldung: **14.04.2004**
(21) Anmeldenummer: 03102720.4
(22) Anmeldetag: 08.09.2003
(51) Int. Cl.: H04L 12/28

(54) **Verfahren zur Einrichtung oder Änderung teilnehmerbezogener Einträge in einer Datenbank**

(30) Priorität: 07.10.2002 DE 10246692
(71) Anmelder: SIEMENS AKTIENGESELLSCHAFT, 80333 München (DE)
(72) Erfinder: Wietfeld, Christian, 14612, Falkensee (DE)

(57) **Zusammenfassung**

Verfahren zur Einrichtung oder Änderung teilnehmerbezogener Einträge in einer ersten Datenbank eines Dienstes, der über das HTTP-realisiert wird, wobei auf Basis einer HTTP-Proxy-Plattform bei einem Aufruf des Dienstes ein vorab implementierter Trigger aktiviert, aus einer zweiten Datenbank selbsttätig dienst- und teilnehmerbezogene Daten abgerufen und in der ersten Datenbank eingerichtet oder geändert werden und nach Abschluss der Einrichtung der Trigger in der Plattform teilnehmerbezogen deaktiviert wird.

## Beschreibung

Die Erfindung betrifft ein Verfahren zur Einrichtung oder Änderung teilnehmerbezogener Einträge in einer Datenbank und des weiteren eine Anordnung zu dessen Durchführung.

Die Telekommunikationsnetze entwickeln sich seit Jahren mit hoher Dynamik zu schnellen, effizienten und für breiteste Benutzerkreise zugänglichen Informations- und Unterhaltungsmedien. Im Zuge dieser Entwicklung wurden vielfältige Datendienste geschaffen, die registrierten Nutzern kontinuierlich gemäß einem vorgegebenen Profil Daten (Informationen oder Unterhaltung) liefern. Mittlerweile sind viele dieser Datendienste - insbesondere auch mobile Datendienste, die das HTTP-Protokoll zur Datenübertragung nutzen - personalisierbar. Die Ausführung des Dienstes ist also abhängig von Informationen bzw. Einstellungen, die einem einzelnen Nutzer oder einer Nutzergruppe zugeordnet sind. Es kann sich hierbei um den Teilnehmernamen, die Heimatadresse (bei einem ortsabhängigen Dienst), ein persönliches Diensteportfolio (Portal) oder auch einen Teilnehmercode bzw. -identifikator (CLID) handeln.

Die Bereitstellung eines personalisierten Dienstes erfordert die sogenannte "Einrichtung" des Nutzers (Teilnehmers) in einer Datenbank der entsprechenden Dienstplattform, d.h. die Vornahme nutzerbezogener Einträge in dieser Datenbank.

Dies ist zunächst, als sogenanntes "Manual Provisioning", durch einen Anruf des Nutzers bei einem Kundenbetreuer des Dienstes und persönliche Mitteilung der entsprechenden Daten an diesen zu veranlassen. Der Kundenbetreuer greift dann direkt auf die Datenbank zu und nimmt die erforderlichen Einträge unmittelbar aufgrund der vom Kunden übermittelten In formationen vor. Diese Art der Einrichtung eines Teilnehmers und (auf diesen bezogen) Aktivierung eines personalisierten Dienstes erfordert also jedenfalls für Dienste mit breiter Nutzung einen erheblichen Personalaufwand und ist mit entsprechenden Personalkosten verbunden. Nachteilig für die Akzeptanz eines solchen Dienstes ist es, dass die Teilnehmer eine gewisse Eintrittsbarriere überwinden müssen, um den erforderlichen Anruf beim Kundenbetreuer zu tätigen und diesem persönliche Daten "preiszugeben".

Mit dem sogenannten "Bulk Provisioning" werden vorsorglich alle Teilnehmer eines TK-Netzes als potentielle Nutzer eines zu etablierenden Dienstes eingerichtet. Hierbei muss jeder einzelne Eintrag sequentiell vorgenommen werden, und die Datenbasis muss fortlaufend synchronisiert werden. Dies erfordert speziell bei großen Netzen mit vielen Teilnehmern die Bereitstellung bzw. Inanspruchnahme erheblicher Verarbeitungs-Ressourcen und auch einen relativ hohen Zeitaufwand. Dieser kann, je nach Umfang der einzurichtenden Daten, bei mehreren Stunden bis zu einigen Tagen liegen.

Möglich und in der Praxis auch üblich ist ferner die durch den Nutzer selbst über einen benutzergesteuerten Dialog erfolgende Einrichtung seines Datensatzes in der Datenbank, die als "Self-Provisioning" bezeichnet wird. Dieses Verfahren ist für den Dienstanbieter, der im wesentlichen nur die Zugriffsmöglichkeiten und den Nutzerdialog zu implementieren hat, relativ unaufwendig. Problematisch ist aber die ausgesprochen hohe Eintrittsbarriere: Nur erfahrene Nutzer von Datendiensten trauen sich die selbstständige Personalisierung eines Dienstes zu. Das kann den Anbieter insbesondere in einem Massenmarkt erhebliche Marktanteile kosten.

Bei mobilen Datendiensten auf der Basis des WAP (Wireless Application Protocol) ist das sogenannte "WAP Auto-Provisioning" bekannt geworden. Hierbei wird durch eine entsprechende Funktion überprüft, ob ein Teilnehmer im WAP-Gateway des entsprechenden Mobilfunknetzes eingerichtet ist. Der Basismechanismus bietet die Möglichkeit einer Erweiterung auf weitere Dienst-Plattformen. Es ist jedoch nicht möglich, unabhängig vom Zustand des WAP-Gateways weitere Einrichtungsvorgänge (Provisioning) anzustoßen. Dieses Defizit stellt gerade in einem Markt, in dem bereits in bestimmten Diensten aktive Nutzer in einfacher Weise auf weiteren Dienstplattformen eingerichtet werden sollen, einen ganz entscheidenden Nachteil dar.

Der Erfindung liegt daher die Aufgabe der Bereitstellung eines verbesserten Verfahrens und einer Anordnung der in Rede stehenden Art zugrunde, welche insbesondere auf der einen Seite nur einen relativ niedrigen Implementierungsaufwand beim Dienstanbieter erfordern und auf der anderen Seite unproblematisch für den potentiellen Nutzer sind und somit keine Eintrittsbarriere schaffen.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 7 gelöst.

Ein wesentlicher Gedanke der Erfindung besteht in der Nutzung der Möglichkeit eines HTTP-Proxy, in Abhängigkeit von einem dienstspezifischen Trigger den Einrichtungs- bzw. Personalisierungsprozess zu initiieren. Das Anstoßen erfolgt bei Aufruf des entsprechenden Dienstes, über die Aktivierung des erwähnten Triggers. Sobald der Vorgang erfolgreich abgeschlossen wurde, wird der Trigger (Provisioning-Trigger) innerhalb der HTTP-Proxy-Plattform teilnehmerbezogen wieder deaktiviert.

Der HTTP-Verkehr kann dabei z.B. bezüglich des Aufrufs einer bestimmten URL analysiert werden. Sobald die entsprechende (vorbestimmte) URL aufgerufen wird und der zugeordnete Trigger aktiviert ist, übernimmt ein vorgegebener Einrichtungs-Prozessablauf einen Abruf der aktuellen dienst- und teilnehmerspezifischen Einträge aus einer (bezüglich des in Rede stehenden Dienstes) externen Datenbank und die Einrichtung der erforderlichen Daten in der dienstspezifischen Plattform (Datenbank) .

Das vorgeschlagene Verfahren eignet sich grundsätzlich für alle Dienst-Plattformen und Applikationen, die über den HTTP-Verkehrspfad angesprochen werden, und es kann zu jedem sinnvollen Zeitpunkt praktiziert werden. Insbesondere können neben der erstmaligen Aktivierung eines Dienstes für einen neuen Teilnehmer - gewissermaßen mit einem initialen Trigger - auch zu jedem späteren Zeitpunkt Trigger gesetzt werden, um bereits vorhandene Einträge zu ändern oder auch Teilnehmer auf weiteren Plattformen einzurichten bzw. zu aktivieren.

Ein wesentlicher Vorteil der Lösung besteht darin, dass - anders als beim oben erwähnten "Bulk Provisioning" - nur Teilnehmer in der Dienst-Datenbank eingerichtet werden, die tatsächlich den Dienst nutzen. Dies ermöglicht eine nutzungsgerechte Dimensionierung der Dienst-Datenbank.

In einer bevorzugten Verfahrensführung werden in die Einrichtung bzw. Änderung der dienst- und teilnehmerbezogenen Daten aus einem Teilnehmer-Dialog stammende Daten einbezogen. Hiermit ist die Einbindung zusätzlicher, unmittelbar vom Nutzer gelieferter Informationen in den Einrichtungsprozess möglich. Im Ergebnis kann der Datenbestand der Dienst-Datenbank gegenüber demjenigen der externen Datenbank (zentralen Kundendatenbasis o.ä.) erweitert werden.

Die mit der vorgeschlagenen Lösung gegebene Funktionalität kann auch dazu eingesetzt werden, Teilnehmer von einer Dienstplattform auf eine andere zu migrieren, und zwar zu dem Zeitpunkt, zu dem ein Teilnehmer erstmalig den "neuen" Dienst nutzt. Bei dieser Variante handelt es sich bei beiden Datenbanken um dezentrale Datenbanken der entsprechenden Dienste.

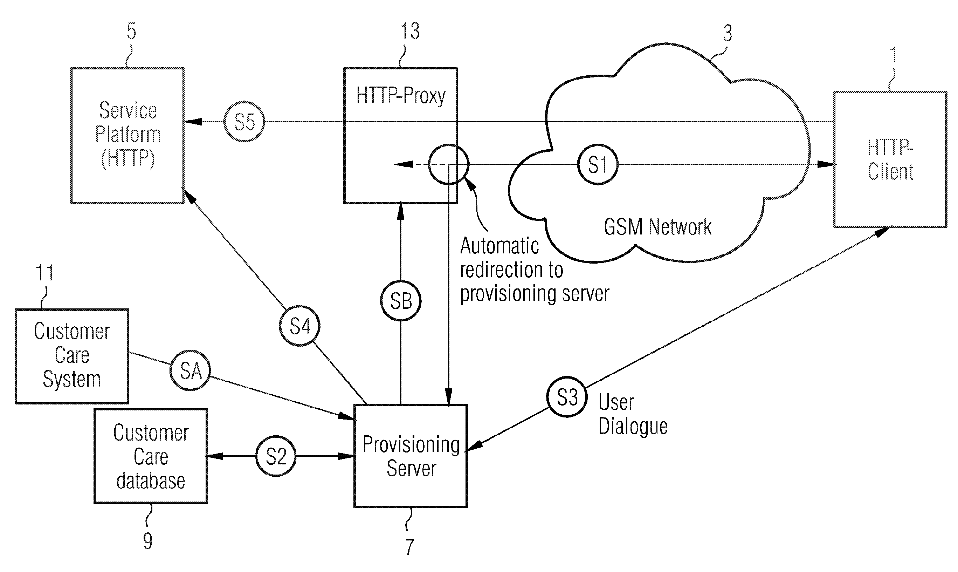

Vorteile und Zweckmäßigkeiten der Erfindung ergeben sich im übrigen aus der nachfolgenden Systembeschreibung anhand der einzigen Figur. Hierbei handelt es sich um eine synoptische Darstellung, die sowohl wesentliche Funktionskomponenten einer bevorzugten Ausführung des vorgeschlagenen Systems als auch wesentliche Verfahrensschritte zeigt.

Bei der in der Figur gezeigten Konfiguration ist ein Nutzer-Endgerät (HTTP Client) 1 eines potentiellen Dienstnutzers über ein GSM-Mobilfunknetz (GSM Network) 3 mit einer HTTP-Dienstplattform (Service Platform) 5 einerseits und einem Einrichtungs-Server (Provisioning Server) 7 andererseits verbindbar. Der Einrichtungs-Server 7 ist seinerseits mit einer zentralen Kundendatenbasis (Customer Care Database) 9 und einem Kundenbetreuungssystem 11 des Mobilfunknetzes verknüpft. In die Verbindung zwischen dem Nutzer-Endgerät 1 und der HTTP-Dienstplattform 5 ist ein HTTP-Proxy 13 als Hilfsmittel zur Einrichtung der Kundendaten auf der Plattform "eingeschleift".

Bei der Etablierung des neuen Dienstes werden vom Kundenbetreuungssystem 11 dem Einrichtungs-Server 7 in einem Konfigurierungsvorgang SA Informationen bezüglich des Vorgangs der Dateneinrichtung auf der Dienstplattform (bereitzustellende Daten, Art des Triggers etc.) übermittelt. Der Einrichtungs-Server 7 setzt in einem nachfolgenden Vorgang SB im HTTP-Proxy 13 den Trigger zur Umleitung einer (initialen) Anforderung, die vom Nutzer-Endgerät 1 aus an die Dienstplattform 5 gerichtet wird.

Aufgrund dieses Triggers erfolgt in einem Schritt S1 eine Umleitung des HTTP-Request an den Einrichtungs-Server 7. Daraufhin findet in einem Schritt S2 eine Synchronisation mit der Kundendatenbasis 9 statt, wobei - optional - Daten aus einem parallel zwischen dem Einrichtungs-Server 7 und dem Nutzer-Endgerät 1 geführten Nutzerdialog (Schritt S3) einge bunden werden. Im Ergebnis wird im Schritt S4 entweder ein neuer Nutzereintrag (User Account) geschaffen oder ein vorhandener Eintrag aktualisiert. Im Schritt S5 schließlich erfolgt ein Neustart der vom Nutzer mit seinem HTTP-Request begehrten Session, und das Nutzer-Endgerät wird mit der Dienstplattform 5 verbunden. Nun kann der Dienst aufgrund aktueller Nutzerdaten in Anspruch genommen werden.

Die Ausführung der Erfindung ist nicht auf dieses Beispiel beschränkt, sondern ebenso in Abwandlungen möglich, die im Rahmen fachgemäßen Handelns liegen.

## Patentansprüche

1. Verfahren zur Einrichtung oder Änderung teilnehmerbezogener Einträge in einer ersten Datenbank eines Dienstes, der über das HTTP-realisiert wird,
**dadurch gekennzeichnet, dass**
auf Basis einer HTTP-Proxy-Plattform bei einem Aufruf des Dienstes ein vorab implementierter Trigger aktiviert,
aus einer zweiten Datenbank selbsttätig dienst- und teilnehmerbezogene Daten abgerufen und in der ersten Datenbank eingerichtet oder geändert werden und
nach Abschluss der Einrichtung der Trigger in der Plattform teilnehmerbezogen deaktiviert wird.

2. Verfahren nach Anspruch 1,
**dadurch gekennzeichnet, dass**
die erste Datenbank eine dezentrale Datenbank und die zweite Datenbank eine zentrale Kundendatenbasis ist, in der teilnehmerbezogene Daten mehrerer Dienste gespeichert sind.

3. Verfahren nach Anspruch 1,
**dadurch gekennzeichnet, dass**
die erste und zweite Datenbank dezentrale Datenbanken eines ersten und zweiten Dienstes sind, wobei der Teilnehmer vom zweiten zum ersten Dienst migriert wird.

4. Verfahren nach einem der vorangehenden Ansprüche,
**dadurch gekennzeichnet, dass**
als Aufruf des Dienstes das Ansprechen einer diesem zugeordneten URL ausgewertet wird.

5. Verfahren nach einem der vorangehenden Ansprüche,
**dadurch gekennzeichnet, dass**
in die Einrichtung bzw. Änderung der dienst- und teilnehmerbezogenen Daten aus einem Teilnehmer-Dialog stammende Daten einbezogen werden.

6. Verfahren nach einem der vorangehenden Ansprüche,
**dadurch gekennzeichnet, dass**
es sich bei dem Dienst um einen über ein Mobilfunknetz bereitgestellten Dienst handelt.

7. Anordnung zur Durchführung des Verfahrens nach einem der vorangehenden Ansprüche, mit
einer ersten Datenbank, die einer HTTP-Dienstplattform zugeordnet ist,
einer zweiten Datenbank,
einem mit der ersten und zweiten Datenbank zusammenwirkenden Einrichtungs-Server zur Einrichtung dienst- und teilnehmerbezogener Einträge in der ersten Datenbank aufgrund von aus der zweiten Datenbank stammenden Daten und
einem bezüglich eines HTTP-Client der HTTP-Dienstplattform vorgeschalteten und mit dem Einrichtungs-Server zur Veranlassung der Einrichtung bzw. Änderung der Einträge in der ersten Datenbasis zusammenwirkenden HTTP-Proxy.
